# EUROPEAN PATENT APPLICATION

(11) **EP 4 776 640 A1**
(43) Date of publication of application: **15.07.2026**
(21) Application number: 24932447.6
(22) Date of filing: 25.12.2024
(51) Int. Cl.: H04N 23/50

(54) **CAMERA DECORATION ASSEMBLY, REAR SHELL MODULE AND ELECTRONIC DEVICE**

(30) Priority: 26.03.2024 CN 202410356307
(71) Applicant: HUAWEI TECHNOLOGIES CO., LTD., Shenzhen 518129 (CN)
(72) Inventor: WU, Shuang, Shenzhen, Guangdong 518129 (CN)
(74) Representative: Isarpatent
(86) International application number: PCT/CN2024/142287
(87) International publication number: WO 2025/200645

(57) **Abstract**

This application relates to the field of electronic device technologies, and discloses a camera decoration assembly, a rear housing module, and an electronic device, to improve imaging quality of an electronic device in which the camera decoration assembly is used, and improve appearance quality of the electronic device. The camera decoration assembly includes a decoration member, a lens, a first adhesive layer, and a second adhesive layer. The decoration member includes a first surface and a second surface that are disposed facing away from each other in a first direction. A through hole that penetrates the first surface and the second surface is provided in the decoration member. The first surface is connected to the lens via the first adhesive layer, the second surface is connected to a camera via the second adhesive layer, and two ends of the through hole are respectively sealed by the lens and the camera to form a sealed cavity. The lens includes a window region, and a projection of the window region in the first direction is located within a projection range of the through hole in the first direction. A part of a bonding region of at least one of the first adhesive layer and the second adhesive layer is exposed in the sealed cavity.

## Description

### CROSS-REFERENCE TO RELATED APPLICATIONS

This application claims priority to Chinese Patent Application No. 202410356307.9, filed with the China National Intellectual Property Administration on March 26, 2024 and entitled "CAMERA DECORATION ASSEMBLY, REAR HOUSING MODULE, AND ELECTRONIC DEVICE", which is incorporated herein by reference in its entirety.

### TECHNICAL FIELD

This application relates to the field of electronic device technologies, and in particular, to a camera decoration assembly, a rear housing module, and an electronic device.

### BACKGROUND

A camera module is a module component that allows an electronic device to implement a photographing function and a video recording function. In an electronic device configured with a camera module, a camera decoration member and a lens are usually mounted on a rear housing of the electronic device. A through hole is provided in the camera decoration member, and the lens covers the through hole of the camera decoration member. The lens has a window region disposed opposite to the through hole, and a light inlet of the camera module is exposed in the through hole, so that the camera module can collect ambient light outside the electronic device through the window region of the lens. During an assembly process of the entire device, because an assembly workshop is not absolutely dust-free, it is prone to accumulation of some dust and lint near the camera module or the decoration member. If the dust and lint fall into the window region of the lens, an appearance of the electronic device is affected, and a phenomenon of dark shadow defects is caused when the camera module captures an image.

### SUMMARY

This application provides a camera decoration assembly, a rear housing module, and an electronic device, to improve imaging quality of an electronic device in which the camera decoration assembly is used, and improve appearance quality of the electronic device.

According to a first aspect, this application provides a camera decoration assembly. The camera decoration assembly may include a decoration member, a lens, a first adhesive layer, and a second adhesive layer. The decoration member includes a first surface and a second surface, the first surface and the second surface are disposed opposite to each other in a first direction, a through hole extending in the first direction is provided in the decoration member, and the through hole penetrates the first surface and the second surface. The first surface may be connected to the lens via the first adhesive layer, and the second surface may be connected to a camera via the second adhesive layer. In this way, two ends of the through hole may be respectively sealed by the lens and the camera to form a sealed cavity. The lens includes a window region. A projection of the window region in the first direction is located within a projection range of the through hole in the first direction. In addition, the projection of the window region in the first direction does not overlap a projection of the first adhesive layer in the first direction, and the projection of the window region in the first direction does not overlap a projection of the second adhesive layer in the first direction, to prevent the first adhesive layer and the second adhesive layer from adversely affecting a photographing effect of the camera. A part of a bonding region of at least one of the first adhesive layer and the second adhesive layer is exposed in the sealed cavity. In this design, after assembly of the entire device is completed, the entire device is vibrated or the lens is knocked, so that fallout particles such as dust and lint in the sealed cavity may be adhered to the bonding region that is of the first adhesive layer and/or the second adhesive layer and that is exposed in the sealed cavity, thereby achieving dust removal, reducing a risk that the fallout particles fall on a light inlet of the camera or the window region of the lens, and improving imaging quality of the camera and appearance quality of an electronic device. In addition, a proportion of electronic devices that are reworked and disassembled due to the fallout particles in the window region can be effectively reduced, and production efficiency of the electronic device can be improved.

In some implementation solutions, the decoration member includes a main body and a boss, the boss is fastened on one side of the main body, and the through hole may sequentially penetrate the main body and the boss. In this case, a surface that is of the main body and that faces away from the boss may serve as the first surface of the decoration member, and a surface that is of the boss and that faces away from the main body may serve as the second surface of the decoration member.

In some implementation solutions, a first groove may be provided on an inner wall of the through hole, and the first groove extends to the first surface. Alternatively, it may be understood as that the first groove runs through the first surface. In this way, the first groove may be formed as a part of the sealed cavity. A part of a bonding region on a side that is of the first adhesive layer and that faces away from the lens is exposed in the first groove. The first groove is designed, so that an area of the bonding region that is of the first adhesive layer and that is exposed in the sealed cavity can be effectively increased, thereby improving a dust removal effect in the sealed cavity.

In an implementation, the projection of the first adhesive layer in the first direction may cover a projection of the first groove in the first direction, to further increase the area of the bonding region that is of the first adhesive layer and that is exposed in the sealed cavity.

In some implementation solutions, the first groove includes a step surface disposed facing the first surface, and a first adhesive body may be disposed on the step surface of the first groove. The first adhesive body can also adhere to the fallout particles in the sealed cavity, to implement a dust-trapping function.

In some implementation solutions, the first groove may be of an annular structure. In this way, the bonding region that is of the first adhesive layer and that is exposed in the sealed cavity may also form a complete ring. Therefore, the area of the bonding region that is of the first adhesive layer and that is exposed in the sealed cavity can be increased to some extent, thereby further improving the dust removal effect in the sealed cavity.

On a basis that the first groove is of an annular structure, the first adhesive body may extend in a circumferential direction of the step surface of the first groove and be disposed in an annular manner, to increase a surface area of the first adhesive body, thereby increasing a dust-trapping effect of the first adhesive body.

In some implementation solutions, a second groove may be provided on the inner wall of the through hole, and the second groove extends to the second surface. Alternatively, it may be understood as that the second groove runs through the second surface. In this way, the second groove may also be formed as a part of the sealed cavity. A part of a bonding region on a side that is of the second adhesive layer and that faces the lens is exposed in the second groove. The second groove is designed, so that an area of the bonding region that is of the second adhesive layer and that is exposed in the sealed cavity can be effectively increased, thereby improving the dust removal effect in the sealed cavity.

In an implementation, the projection of the second adhesive layer in the first direction may cover a projection of the second groove in the first direction, to further increase the area of the bonding region that is of the second adhesive layer and that is exposed in the sealed cavity.

In some implementation solutions, the second groove includes a step surface disposed facing the second surface, and a second adhesive body may be disposed on the step surface of the second groove. The second adhesive body can also adhere to the fallout particles in the sealed cavity, to implement a dust-trapping function.

In some implementation solutions, the second groove may be of an annular structure. In this way, the bonding region that is of the second adhesive layer and that is exposed in the sealed cavity may also form a complete ring. Therefore, the area of the bonding region that is of the second adhesive layer and that is exposed in the sealed cavity can be increased to some extent, thereby further improving the dust removal effect in the sealed cavity.

On a basis that the second groove is of an annular structure, the second adhesive body may extend in a circumferential direction of the step surface of the second groove and be disposed in an annular manner, to increase a surface area of the second adhesive body, thereby increasing a dust-trapping effect of the second adhesive body.

In some implementation solutions, the camera decoration assembly further includes a third adhesive layer, and the third adhesive layer may be bonded to the second surface. The third adhesive layer is located on an inner side of the second adhesive layer in a radial direction of the through hole. A projection of the third adhesive layer in the first direction does not overlap the projection of the window region in the first direction, to prevent the third adhesive layer from adversely affecting the photographing effect of the camera. In addition, a thickness of the third adhesive layer is less than a thickness of the second adhesive layer. Under an action of the thickness of the second adhesive layer, a gap is formed between the second surface of the decoration member and the camera, the gap communicates with the sealed cavity, and a bonding region on a side that is of the third adhesive layer and that faces away from the lens is exposed in the gap. Therefore, the third adhesive layer is used to achieve a dust removal effect on the sealed cavity.

In some implementation solutions, the first adhesive layer may be adhesive backing, and the first adhesive layer may be separately bonded to the first surface of the decoration member and the lens, to fasten the first surface of the decoration member and the lens. The second adhesive layer may be a foam tape. A surface of a side that is of the second adhesive layer and that faces the second surface is a bonding region of the second adhesive layer, and a surface of a side that is of the second adhesive layer and that faces away from the second surface is non-adhesive. The surface of the side that is of the second adhesive layer and that faces the second surface is bonded to the second surface, and the surface of the side that is of the second adhesive layer and that faces away from the second surface may be in interference fit with the camera, so that the camera is in close contact with the second surface by squeezing the second adhesive layer.

According to a second aspect, this application further provides a camera decoration assembly. The camera decoration assembly may include a decoration member, a lens, a first adhesive layer, a second adhesive layer, and a third adhesive layer. The decoration member includes a first surface and a second surface, the first surface and the second surface are disposed opposite to each other in a first direction, a through hole extending in the first direction is provided in the decoration member, the through hole penetrates the first surface and the second surface, and the through hole may be used to accommodate a part of the camera. The lens is connected to the first surface via the first adhesive layer, and the lens is connected to the part that is of the camera and that is accommodated in the through hole via the second adhesive layer. The third adhesive layer is bonded to a side that is of the lens and that faces the camera. The third adhesive layer is located on an inner side of the second adhesive layer in a radial direction of the through hole, and a thickness of the third adhesive layer is less than a thickness of the second adhesive layer. The lens includes a window region. A projection of the window region in the first direction is located within a projection range of the through hole in the first direction. In addition, the projection of the window region in the first direction does not overlap a projection of the third adhesive layer in the first direction, to prevent the third adhesive layer from adversely affecting a photographing effect of the camera. Under an action of the thickness of the second adhesive layer, a gap between the camera and the lens forms a sealed cavity. In addition, because the third adhesive layer is located on the inner side of the second adhesive layer, the third adhesive layer is naturally located in the sealed cavity. In this way, a bonding region on a side that is of the third adhesive layer and that faces away from the lens may be exposed in the sealed cavity. In this design, after assembly of the entire device is completed, the entire device is vibrated or the lens is knocked, so that fallout particles such as dust and lint in the sealed cavity may be adhered to the bonding region that is of the third adhesive layer and that is exposed in the sealed cavity, thereby achieving dust removal, reducing a risk that the fallout particles fall on a light inlet of the camera or the window region of the lens, and improving imaging quality of the camera. In addition, a proportion of electronic devices that are reworked and disassembled due to the fallout particles in the window region can be effectively reduced, and production efficiency of the electronic device can be improved.

In some implementation solutions, the first adhesive layer may be adhesive backing, and the first adhesive layer may be separately bonded to the first surface of the decoration member and the lens, to fasten the first surface of the decoration member and the lens. The second adhesive layer may be a foam tape. A surface of a side that is of the second adhesive layer and that faces the lens is a bonding region of the second adhesive layer, and a surface of a side that is of the second adhesive layer and that faces away from the lens is non-adhesive. The surface of the side that is of the second adhesive layer and that faces the lens is bonded to the second surface, and the surface of the side that is of the second adhesive layer and that faces away from the lens may be in interference fit with the camera, so that the camera is in close contact with the lens by squeezing the second adhesive layer. The third adhesive layer may be adhesive backing, surfaces of two sides of the third adhesive layer are bonding regions of the third adhesive layer, and the surface of one side of the third adhesive layer is bonded to the lens.

According to a third aspect, this application further provides a rear housing module. The rear housing module includes a rear housing and the camera decoration assembly in any implementation solution of the first aspect and the second aspect. A hole is provided in the rear housing, the camera decoration assembly is mounted in the hole, a peripheral side of the decoration member fits against an inner wall of the hole, a first surface of the decoration member is located on one side of the rear housing, and a second surface of the decoration member is located on the other side of the rear housing. After the rear housing module is assembled in the entire device, a camera and the camera decoration assembly of the rear housing module may cooperate to form a sealed cavity. A first adhesive layer and/or a second adhesive layer can trap fallout particles in the sealed cavity, thereby reducing a risk that the fallout particles fall on a light inlet of the camera or a window region of a lens, and improving imaging quality of the camera.

For example, the decoration member may be bonded and fastened to the inner wall of the hole.

According to a fourth aspect, this application further provides an electronic device. The electronic device includes a display, a camera, and the rear housing module provided in the third aspect. The display may be connected to the rear housing module to form accommodation space. A first surface of the decoration member is located outside the accommodation space, and a second surface of the decoration member is located inside the accommodation space. The camera is disposed in the accommodation space, and a light-emission side of the camera is opposite to a position of a window region of the lens, so that the camera can collect light that enters an interior of the electronic device from the window region.

In an implementation, the first surface may be connected to the lens via a first adhesive layer, and the second surface may be connected to the camera via a second adhesive layer. The camera can cooperate with the second surface to form a sealed cavity. The first adhesive layer and/or the second adhesive layer can trap fallout particles in the sealed cavity, thereby reducing a risk that the fallout particles fall on a light inlet of the camera or the window region of the lens, and improving imaging quality of the camera.

In another implementation, the lens is connected to the first surface via a first adhesive layer, the lens is connected to a part that is of the camera and that is accommodated in a through hole via a second adhesive layer, a third adhesive layer is bonded to a side that is of the lens and that faces the camera, and the third adhesive layer is located on an inner side of the second adhesive layer in a radial direction of the through hole. The camera can cooperate with the lens to form a sealed cavity, and the third adhesive layer can trap fallout particles in the sealed cavity, thereby reducing a risk that the fallout particles fall on a light inlet of the camera or the window region of the lens, and improving imaging quality of the camera.

### BRIEF DESCRIPTION OF DRAWINGS

FIG. 1 is a diagram of a structure of an electronic device according to an embodiment of this application;
FIG. 2 is a partial exploded view of an electronic device shown in the figure;
FIG. 3 is a cross-sectional diagram of a structure of an electronic device shown in the figure along a line A-A;
FIG. 4 is a diagram of a structure of a camera decoration assembly and a camera in an assembled state according to an embodiment of this application;
FIG. 5 is a partial exploded view of a camera decoration assembly and a camera according to an embodiment of this application;
FIG. 6 is a sectional view of another camera decoration assembly and a camera in an assembled state according to an embodiment of this application;
FIG. 7 is a sectional view of another camera decoration assembly and a camera in an assembled state according to an embodiment of this application;
FIG. 8 is a sectional view of another camera decoration assembly and a camera in an assembled state according to an embodiment of this application;
FIG. 9 is a sectional view of another camera decoration assembly and a camera in an assembled state according to an embodiment of this application;
FIG. 10 is a sectional view of another camera decoration assembly and a camera in an assembled state according to an embodiment of this application;
FIG. 11 is a sectional view of another camera decoration assembly and a camera in an assembled state according to an embodiment of this application;
FIG. 12 is a partial enlarged view at B in FIG. 11;
FIG. 13 is a sectional view of another camera decoration assembly and a camera in an assembled state according to an embodiment of this application; and
FIG. 14 is a partial enlarged view at C in FIG. 13.

### Reference numerals:

1: electronic device; 100: display; 110: cover; 120: display panel; 200: rear housing module; 210: rear housing; 211: hole;
221a: first surface; 221b: second surface; 220: camera decoration assembly; 221: decoration member; 2211: main body; 2212: boss;
2213: through hole; 22131: first groove; 22132: second groove; 2214: recess; 2215: sealed cavity; 222: lens;
2221: window region; 223: first adhesive layer; 224: second adhesive layer; 2241: foam layer; 2242: adhesive backing layer; 225: first adhesive body;
226: second adhesive body; 227: third adhesive body; 300: camera; 310: lens barrel; 311: first barrel body; 312: second barrel body; 313: shoulder;
400: middle frame.

### DESCRIPTION OF EMBODIMENTS

To make objectives, technical solutions, and advantages of this application clearer, the following further describes embodiments of this application in detail with reference to accompanying drawings. However, example implementations can be implemented in a plurality of forms, and should not be construed as being limited to the implementations described herein. Identical reference numerals in the accompanying drawings denote identical or similar structures. Therefore, repeated descriptions thereof are omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

It should be noted that details are set forth in the following descriptions for ease of understanding this application. However, embodiments of this application can be implemented in a plurality of manners different from those described herein, and a person skilled in the art can perform similar promotion without departing from the connotation of embodiments of this application. Therefore, this application is not limited to specific implementations disclosed below.

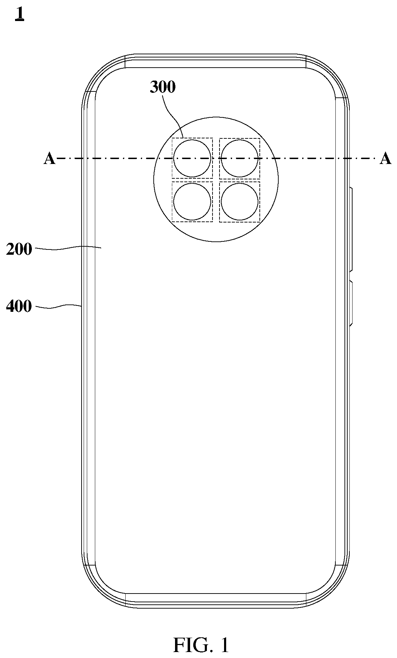

FIG. 1 is a diagram of a structure of an electronic device according to an embodiment of this application. Refer to FIG. 1. The electronic device 1 provided in this embodiment of this application may be a mobile phone, a tablet computer (tablet personal computer), a laptop computer (laptop computer), a personal digital assistant (personal digital assistant, PDA for short), a wearable device, or a device in another form that has a photographing function and a video recording function. In the embodiment shown in FIG. 1, an example in which the electronic device 1 is a mobile phone is used for description.

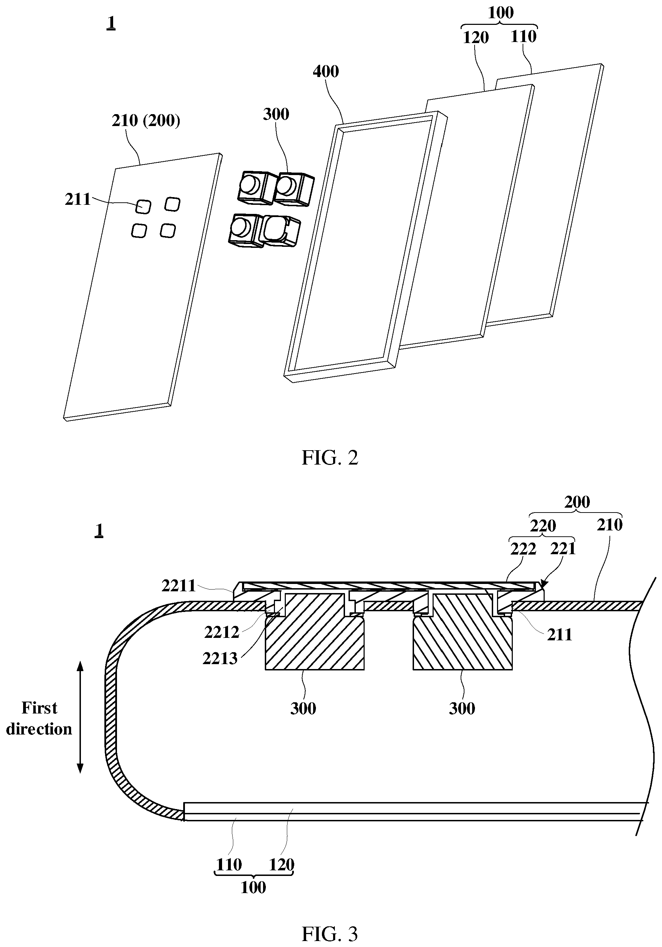

FIG. 2 is a partial exploded view of the electronic device 1 shown in FIG. 1. Refer to FIG. 1 and FIG. 2 together. In this embodiment of this application, the electronic device 1 may include a display 100, a rear housing module 200, and a camera 300. It should be noted that FIG. 1, FIG. 2, and the following related accompanying drawings merely schematically show some components included in the electronic device 1. Actual shapes, actual sizes, actual positions, and actual structures of these components are not limited by FIG. 1, FIG. 2, and the following accompanying drawings.

The display 100 is connected to the rear housing module 200, and the display 100 and the rear housing module 200 may be connected to form accommodation space. The camera 300 is disposed in the accommodation space. In addition, although not shown in the figure, the electronic device 1 may further include components such as a circuit board, a battery, a receiver, and a speaker. These components may also be disposed in the accommodation space. The circuit board may integrate electronic components such as a main controller, a storage unit, an antenna module, and a power management module of the electronic device. The battery may supply power to electronic components such as the display 100, the circuit board, the receiver, the speaker, and the camera 300.

In some embodiments, the electronic device 1 may further include a middle frame 400. The display 100 and the rear housing module 200 may be respectively connected to two sides of the middle frame 400. The display 100, the middle frame 400, and the rear housing module 200 jointly enclose to form the accommodation space. For example, the display 100 and the rear housing module 200 may be respectively fastened to the two sides of the middle frame 400 through bonding.

In this embodiment of this application, the display 100 may be configured to display an image, a text, and the like. The display 100 may be a flat screen, or may be a curved screen. The display 100 may include a cover 110 and a display panel 120. The display panel 120 may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a sub-millimeter light-emitting diode (mini light-emitting diode, mini-LED), a micro light-emitting diode display (micro light-emitting diode, micro-LED), a micro organic light-emitting diode (micro organic light-emitting diode, micro-OLED), a quantum dot light-emitting diode (quantum dot light-emitting diode, QLED), or the like. In addition, in some implementations, the display panel 120 may further integrate a touch function. The cover 110 is stacked on a side that is of the display panel 120 and that faces away from the middle frame 400. The cover 110 may be disposed closely against the display panel 120, and may protect the display panel 120 and protect the display panel 120 from dust. A material of the cover 110 may be but is not limited to glass.

In some other embodiments, the electronic device may alternatively be a foldable mobile phone. In this case, the electronic device may include two rear housing modules. In addition, the electronic device may further include a hinge mechanism, and the two rear housing modules are separately connected to the hinge mechanism in a rotating manner, to implement switching between an unfolded state and a folded state of the electronic device when the two rear housing modules rotate around the hinge mechanism. The display is fastened to one surface of the two rear housing modules, and to adapt to the folded state and the unfolded state of the electronic device, the display may be specifically a flexible display.

FIG. 3 is a cross-sectional diagram of a structure of the electronic device 1 shown in FIG. 1 along a line A-A. Refer to FIG. 2 and FIG. 3 together. In this embodiment of this application, the rear housing module 200 may include a rear housing 210 and a camera decoration assembly 220. A hole 211 is provided in the rear housing 210. The hole 211 may communicate an interior of the electronic device 1 with an exterior of the electronic device 1, and the hole 211 may expose a light entrance side of the camera 300. The camera decoration assembly 220 is mounted on the rear housing 210, and the camera decoration assembly 220 includes a decoration member 221 and a lens 222. A thickness direction of the decoration member 221 is defined as a first direction. In the first direction, the decoration member 221 includes a main body 2211 and a boss 2212. The boss 2212 is disposed in the hole 211, and the main body 2211 may be disposed, in a protruding manner, on a side that is of the rear housing 210 and that faces away from the display 100. In other words, the main body 2211 is exposed on the exterior of the electronic device 1. The decoration member 221 is provided with a through hole 2213 that penetrates the decoration member 221 in the first direction, and the through hole 2213 sequentially penetrates the main body 2211 and the boss 2212. Based on a mounting manner of the decoration member 221 in the hole 211, the through hole 2213 may also communicate the interior of the electronic device 1 with the exterior of the electronic device. The lens 222 is fastened to the main body 2211 of the decoration member 221, and the lens 222 may seal the through hole 2213, to isolate the interior of the electronic device 1 from the exterior of the electronic device 1, and reduce a risk that external water or dust enters the interior of the electronic device 1 through a light hole. For example, a material of the lens 222 may be but is not limited to glass.

In this embodiment, the boss 2212 may be fastened in the hole 211 through bonding or the like. In addition, a projection of the boss 2212 in the first direction may be located within a projection range of the main body 2211 in the first direction. In this way, after the boss 2212 is mounted in the hole 211, a surface that is of the main body 2211 and that faces the boss 2212 may be in contact with a surface of the side that is of the rear housing 210 and that faces away from the display 100. In specific implementation, the surface that is of the main body 2211 and that faces the boss 2212 may alternatively be fastened to the surface that is of the rear housing 210 and that faces away from the display 100 through bonding, to improve mounting reliability of the decoration member 221 on the rear housing 210.

In an implementation, the main body 2211 may be of a cylindrical shape, and the boss 2212 may be of a cuboid shape. Alternatively, in another implementation, the main body 2211 and the boss 2212 each may be of a cylindrical shape. Alternatively, the main body 2211 may be of a cuboid shape, and the boss 2212 may be of a cylindrical shape. Certainly, the main body 2211 and the boss 2212 may alternatively be of some other regular or irregular shapes.

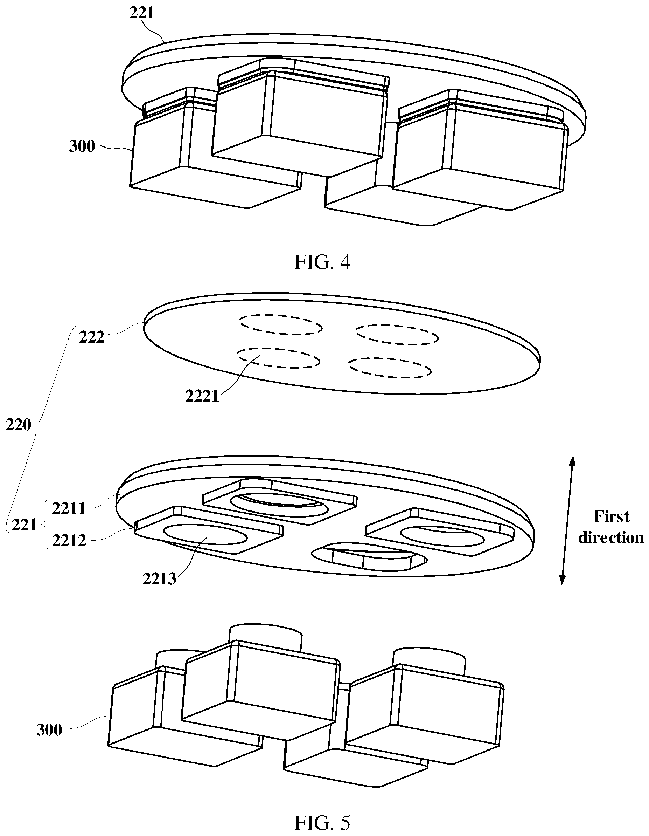

FIG. 4 is a diagram of a structure of a camera decoration assembly 220 and a camera 300 in an assembled state according to an embodiment of this application. FIG. 5 is a partial exploded view of a camera decoration assembly 220 and a camera 300 according to an embodiment of this application. Refer to FIG. 3 to FIG. 5 together. In this embodiment of this application, the electronic device 1 may include one or more cameras 300. Correspondingly, one or more holes 211 one to one corresponding to the cameras 300 may be provided in the rear housing. The decoration member 221 includes one or more bosses 2212. Each boss 2212 is disposed in a corresponding hole 211, and each boss 2212 is provided with a through hole 2213 that penetrates the boss 2212 and the main body 2211. When there are a plurality of cameras 300, the cameras 300 may respectively be a main camera, a wide-angle camera, a long-focus camera, a depth camera, a macro camera, and the like. For example, embodiments shown in FIG. 3 and FIG. 4 show an example in which there are four cameras 300.

In this embodiment, the lens 222 includes a window region 2221, and the window region 2221 is disposed in one-to-one correspondence with the through hole 2213 of the decoration member 221. Therefore, when a plurality of through holes 2213 are provided in the decoration member 221, the lens 222 also correspondingly includes a plurality of window regions 2221. A projection of the window region 2221 in the first direction is located within a projection range of a corresponding through hole 2213 in the first direction. In some embodiments, the window region may also be referred to as a light transmission region of the lens, and the window region may allow light on one side of the lens to be transmitted into the other side of the lens. The window region 2221 is opposite to a position of a light inlet of the camera 300, so that the camera 300 can collect light that enters the interior of the electronic device from the window region 2221. A size of the window region is not limited in this application, provided that a lighting requirement of the camera 300 during photographing can be met. Herein, the light inlet of the camera 300 may be understood as an opening region on the light entrance side of the camera 300, that is, a region in which an optical lens of the camera 300 is exposed.

In addition, except for the window region 2221, other regions of the lens 222 may be coated with ink to form a light-blocking design, to shield structures other than the light inlet of the camera 300 inside the electronic device. This improves an appearance design of the electronic device.

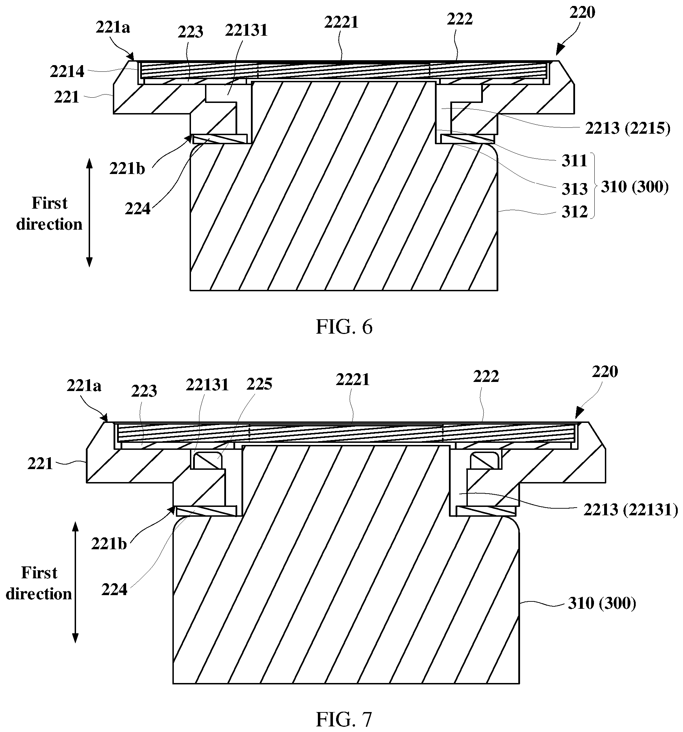

FIG. 6 is a sectional view of another camera decoration assembly 220 and a camera 300 in an assembled state according to an embodiment of this application. FIG. 6 shows a position relationship between one camera 300 and the camera decoration assembly 220. Refer to FIG. 5. In this embodiment of this application, two surfaces that are of the decoration member 221 and that face away from each other in the first direction are defined as a first surface 221a and a second surface 221b. The first surface 221a may be a surface of a side that is of the main body 2211 and that faces away from the boss 2212, and the second surface 221b may be a surface of a side that is of the boss 2212 and that faces away from the main body 2211. It is easy to understand that the through hole 2213 penetrates the first surface 221a and the second surface 221b in the first direction. After the camera 300 decoration assembly is mounted on the rear housing, the first surface 221a is exposed on the side that is of the rear housing and that faces away from the display, and the second surface 221b is exposed on a side that is of the rear housing and that faces the display. That is, the first surface 221a is located outside the electronic device, and the second surface 221b is located inside the electronic device.

As described above, the lens 222 is fastened to the main body 2211. In specific implementation, the lens 222 may be fastened to the first surface 221a of the decoration member 221. A recess 2214 may be provided on the first surface 221a, a thickness of the recess 2214 is approximately equal to a thickness of the lens 222, and the lens 222 may be embedded in the recess 2214. In this way, the main body 2211 may be used to protect an edge of the lens 222, to reduce a risk that the lens 222 is damaged by an external force. In addition, this also helps improve an appearance effect of an appearance surface of the rear housing assembly.

In this embodiment of this application, the camera decoration assembly 220 further includes a first adhesive layer 223 and a second adhesive layer 224. The first adhesive layer 223 is bonded to the first surface 221a of the decoration member 221. The first adhesive layer 223 may be configured to fasten the decoration member 221 to the lens 222. The second adhesive layer 224 is bonded to the second surface 221b of the decoration member 221. The second adhesive layer 224 may be configured to fasten the decoration member 221 to the camera 300. The first adhesive layer 223 and the second adhesive layer 224 are respectively provided with avoidance holes, to avoid the window region 2221 of the lens 222. This may alternatively be understood as that a projection of the first adhesive layer 223 in the first direction does not overlap the projection of the window region 2221 in the first direction, and a projection of the second adhesive layer 224 in the first direction does not overlap the projection of the window region 2221 in the first direction, to prevent the first adhesive layer 223 and the second adhesive layer 224 from adversely affecting a photographing effect of the camera 300.

The first adhesive layer 223 may be adhesive backing, and surfaces of two sides of the first adhesive layer 223 are bonding regions of the first adhesive layer 223. Therefore, the first adhesive layer 223 may be separately bonded to the first surface 221a of the decoration member 221 and the lens 222, to fasten the first surface 221a of the decoration member 221 and the lens 222. The second adhesive layer 224 may be a foam tape. In an implementation, surfaces of two sides of the second adhesive layer 224 are bonding regions of the second adhesive layer 224, and the second adhesive layer 224 may be separately bonded to the second surface 221b of the decoration member 221 and the camera 300, to fasten the second surface 221b of the decoration member 221 and the camera 300. In another implementation, a surface of a side that is of the second adhesive layer 224 and that faces the second surface 221b is a bonding region, and a surface of a side that is of the second adhesive layer 224 and that faces away from the second surface 221b is non-adhesive. In this case, the surface of the side that is of the second adhesive layer 224 and that faces the second surface 221b is bonded to the second surface 221b, and the surface of the side that is of the second adhesive layer 224 and that faces away from the second surface 221b may be in interference fit with the camera 300, so that the camera 300 is in close contact with the second surface 221b by squeezing the second adhesive layer 224.

In some embodiments, a lens barrel 310 of the camera 300 may be of a stepped shaft shape. The lens barrel 310 includes at least a first barrel body 311 and a second barrel body 312. The first barrel body 311 is connected to one end of the second barrel body 312, and a diameter of the first barrel body 311 is less than a diameter of the second barrel body 312. Therefore, a shoulder 313 may be formed between the first barrel body 311 and the second barrel body 312. When the camera 300 is assembled with the camera decoration assembly 220, the first barrel body 311 may extend into the through hole 2213, the first barrel body 311 may be spaced apart from an inner wall of the through hole 2213, and the shoulder 313 is in close contact with the second surface 221b via the second adhesive layer 224. In this case, a side that is of the first barrel body 311 and that faces away from the second barrel body 312 is the light entrance side of the camera 300.

Based on a fitting relationship between the first surface 221a of the decoration member 221 and the lens 222 and a fitting relationship between the second surface 221b of the decoration member 221 and the camera 300, two ends of the through hole 2213 are respectively sealed by the lens 222 and the camera 300. Therefore, the through hole 2213, together with the lens 222 and the camera 300 at the two ends, may form a sealed cavity 2215. In this embodiment of this application, a part of a bonding region of at least one of the first adhesive layer 223 and the second adhesive layer 224 is exposed in the sealed cavity 2215. For example, in the embodiment shown in FIG. 4, a part of a bonding region on a side that is of the first adhesive layer 223 and that faces away from the lens 222 is exposed in the sealed cavity 2215. According to this design, after assembly of the entire device is completed, the entire device is vibrated or the lens 222 is knocked, so that fallout particles such as dust and lint in the sealed cavity 2215 may be adhered to the bonding region that is of the first adhesive layer 223 and/or the second adhesive layer 224 and that is exposed in the sealed cavity 2215, thereby achieving dust removal, reducing a risk that the fallout particles fall on the light inlet of the camera 300 or the window region 2221 of the lens 222, and improving imaging quality of the camera 300 and appearance quality of the electronic device. In addition, a proportion of electronic devices that are reworked and disassembled due to the fallout particles in the window region 2221 can be effectively reduced, and production efficiency of the electronic device can be improved.

Still refer to FIG. 6. In this embodiment of this application, the through hole 2213 includes a first end and a second end. The first end and the second end are disposed opposite to each other in the first direction, the first end is disposed close to the first surface 221a, and the second end is disposed close to the second surface 221b. A first groove 22131 is provided on the inner wall of the through hole 2213, and the first groove 22131 may extend to the first end. Alternatively, it may be understood as that the first groove 22131 runs through the first surface 221a. It is easy to understand that, when the recess 2214 is provided on the first surface 221a, the first groove 22131 is in communication with the recess 2214. It may be learned that the first groove 22131 may be formed as a part of the sealed cavity 2215, a part of a bonding region on a side that is of the first adhesive layer 223 and that faces away from the lens 222 is exposed in the first groove 22131, and another part of the bonding region on the side that is of the first adhesive layer 223 and that faces away from the lens 222 is configured to bond to the first surface 221a. In this way, the bonding region that is of the first adhesive layer 223 and that is exposed in the first groove 22131 may be used to adhere the fallout particles in the sealed cavity 2215. The first groove 22131 is designed, so that an area of the bonding region that is of the first adhesive layer 223 and that is exposed in the sealed cavity 2215 can be effectively increased, thereby improving a dust removal effect in the sealed cavity 2215.

In an implementation, the projection of the first adhesive layer 223 in the first direction may cover a projection of the first groove 22131 in the first direction, to further increase the area of the bonding region that is of the first adhesive layer 223 and that is exposed in the sealed cavity 2215. Specifically, a projection of the avoidance hole of the first adhesive layer 223 in the first direction approximately overlaps the projection of the window region 2221 in the first direction. Because the projection of the window region 2221 in the first direction is located on an inner side of the projection range of the through hole 2213 in the first direction, even if the first groove 22131 is not provided, an inner side part that is of the first adhesive layer 223 and that is close to the avoidance hole of the first adhesive layer 223 may still extend to the sealed cavity 2215. In this way, a part of the bonding region on the side that is of the first adhesive layer 223 and that faces away from the lens 222 can implement a dust-trapping function.

In addition, the first groove 22131 may be of an annular structure. In this way, the bonding region that is of the first adhesive layer 223 and that is exposed in the sealed cavity 2215 may also form a complete ring. Therefore, the area of the bonding region that is of the first adhesive layer 223 and that is exposed in the sealed cavity 2215 can be increased to some extent, thereby further improving the dust removal effect in the sealed cavity 2215.

FIG. 7 is a sectional view of another camera decoration assembly 220 and a camera 300 in an assembled state according to an embodiment of this application. Refer to FIG. 7. In this embodiment of this application, when the first groove 22131 is provided on the inner wall of the through hole 2213, the first groove 22131 includes a step surface disposed facing the first surface 221a, and a first adhesive body 225 may be disposed on the step surface of the first groove 22131. The first adhesive body 225 can also adhere to the fallout particles in the sealed cavity 2215, to implement a dust-trapping function. The first adhesive body 225 may be an adhesive with good adhesion performance, for example, a thermosetting adhesive, a photosensitive adhesive, or a pressure-sensitive adhesive. In specific implementation, the first adhesive body 225 may be formed on the step surface of the first groove 22131 in a plurality of manners such as dispensing, coating, spraying, printing, and attaching.

In some embodiments, the first adhesive body 225 may extend in a circumferential direction of the step surface of the first groove 22131 and be disposed in an annular manner, to increase a surface area of the first adhesive body 225, thereby increasing a dust-trapping effect of the first adhesive body 225.

When the first adhesive body 225 is disposed on the step surface of the first groove 22131, the bonding region of the first adhesive layer 223 may either be exposed in the first groove 22131 or not be exposed in the first groove 22131. This is not limited in this application. When the bonding region of the first adhesive layer 223 is exposed in the first groove 22131, the bonding region that is of the first adhesive layer 223 and that is exposed in the first groove 22131 may be used together with the first adhesive body 225 to jointly adhere to the fallout particles in the sealed cavity 2215, thereby improving a dust removal effect in the sealed cavity 2215. When the bonding region of the first adhesive layer 223 is not exposed in the first groove 22131, the first adhesive body 225 may be used to adhere to the fallout particles in the sealed cavity 2215.

In addition, in this embodiment, a thickness of the first adhesive body 225 is less than a height of the first groove 22131 in the first direction, to prevent the dust-trapping effect of the first adhesive body 225 from being weakened due to bonding to the first adhesive layer 223 or the lens 222.

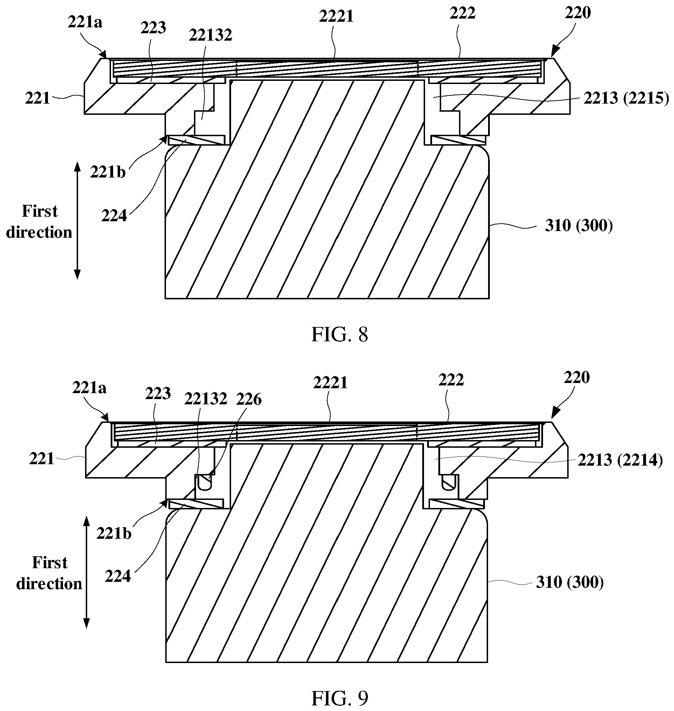

FIG. 8 is a sectional view of another camera decoration assembly 220 and a camera 300 in an assembled state according to an embodiment of this application. Refer to FIG. 8. In this embodiment of this application, a second groove 22132 is provided on the inner wall of the through hole 2213, and the second groove 22132 may extend to the second end. Alternatively, it may be understood as that the second groove 22132 runs through the second surface 221b. It may be learned that the second groove 22132 may be formed as a part of the sealed cavity 2215. A part of a bonding region on a side that is of the second adhesive layer 224 and that faces the lens 222 is exposed in the second groove 22132, and another part of the bonding region on the side that is of the second adhesive layer 224 and that faces the lens 222 is configured to bond to the second surface 221b. In this way, the bonding region that is of the second adhesive layer 224 and that is exposed in the second groove 22132 may be used to adhere to the fallout particles in the sealed cavity 2215. The second groove 22132 is designed, so that an area of the bonding region that is of the second adhesive layer 224 and that is exposed in the sealed cavity 2215 can be effectively increased, thereby improving the dust removal effect in the sealed cavity 2215.

In an implementation, the projection of the second adhesive layer 224 in the first direction may cover a projection of the second groove 22132 in the first direction, to further increase the area of the bonding region that is of the second adhesive layer 224 and that is exposed in the sealed cavity 2215. Specifically, a projection of the avoidance hole of the second adhesive layer 224 in the first direction approximately overlaps the projection of the window region 2221 in the first direction. Because the projection of the window region 2221 in the first direction is located on the inner side of the projection of the through hole 2213 in the first direction, even if the second groove 22132 is not provided, a local inner side that is of the second adhesive layer 224 and that is close to the avoidance hole of the second adhesive layer 224 may still extend to the sealed cavity 2215. In this way, a part of the bonding region on the side that is of the second adhesive layer 224 and that faces away from the lens 222 can implement a dust-trapping function.

In this embodiment, the second groove 22132 may be of an annular structure. In this way, the bonding region that is of the second adhesive layer 224 and that is exposed in the sealed cavity 2215 may also form a complete ring. Therefore, the area of the bonding region that is of the second adhesive layer 224 and that is exposed in the sealed cavity 2215 can be increased to some extent, thereby further improving the dust removal effect in the sealed cavity 2215.

FIG. 9 is a sectional view of another camera decoration assembly 220 and a camera 300 in an assembled state according to an embodiment of this application. Refer to FIG. 9. In this embodiment of this application, when the second groove 22132 is provided on the inner wall of the through hole 2213, the second groove 22132 includes a step surface disposed facing the first surface 221a, and a second adhesive body 226 may be disposed on the step surface of the second groove 22132. The second adhesive body 226 may also be used to adhere to the fallout particles in the sealed cavity 2215, to implement a dust-trapping function. The second adhesive body 226 may be an adhesive with good adhesion performance, for example, a thermosetting adhesive, a photosensitive adhesive, or a pressure-sensitive adhesive. In specific implementation, the second adhesive body 226 may be formed on the step surface of the second groove 22132 in a plurality of manners such as dispensing, coating, spraying, printing, and attaching.

In some embodiments, the second adhesive body 226 may extend in a circumferential direction of the step surface of the second groove 22132 and be disposed in an annular manner, to increase a surface area of the second adhesive body 226, thereby increasing a dust-trapping effect of the second adhesive body 226.

When the second adhesive body 226 is disposed on the step surface of the second groove 22132, the bonding region of the second adhesive layer 224 may either be exposed in the second groove 22132 or not be exposed in the second groove 22132. This is not limited in this application. When the bonding region of the second adhesive layer 224 is exposed in the first groove 22131, the bonding region that is of the second adhesive layer 224 and that is exposed in the second groove 22132 may be used together with the second adhesive body 226 to adhere to the fallout particles in the sealed cavity 2215, thereby improving a dust removal effect in the sealed cavity 2215. When the bonding region of the second adhesive layer 224 is not exposed in the second groove 22132, the second adhesive body 226 may be used to adhere to the fallout particles in the sealed cavity 2215.

In addition, in this embodiment, a thickness of the second adhesive body 226 is less than a height of the second groove 22132 in a second direction, to prevent the dust-trapping effect of the second adhesive body 226 from being weakened due to bonding to the second adhesive layer 224 or the camera 300.

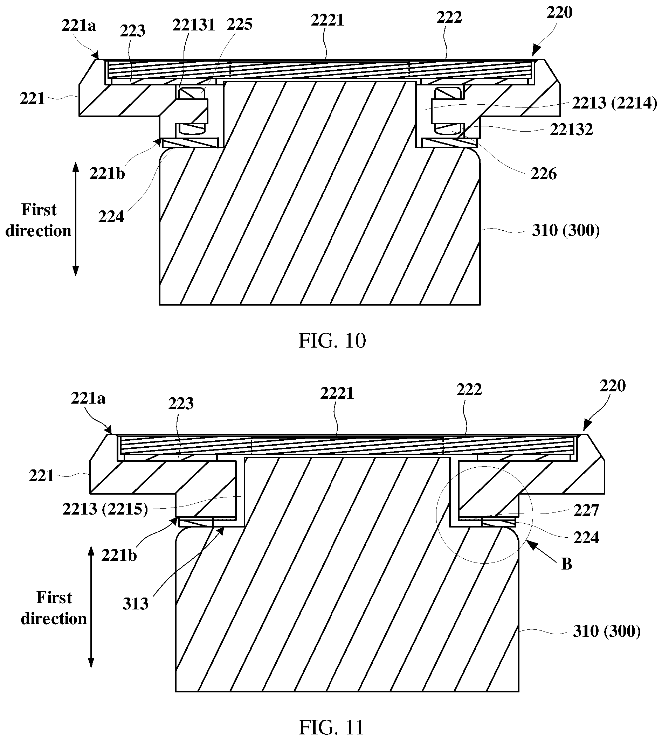

FIG. 10 is a sectional view of another camera decoration assembly 220 and a camera 300 in an assembled state according to an embodiment of this application. Refer to FIG. 10. In this embodiment of this application, the inner wall of the through hole 2213 may include both a first groove 22131 and a second groove 22132. The first groove 22131 extends to the first end, the second groove 22132 extends to the second end, and the first groove 22131 and the second groove 22132 are each formed as a part of the sealed cavity 2215. A part of a bonding region on a side that is of the first adhesive layer 223 and that faces away from a substrate is exposed in the first groove 22131, and a part of a bonding region on a side that is of the second adhesive layer 224 and that faces the lens 222 is exposed in the second groove 22132. In this way, the bonding region that is of the first adhesive layer 223 and that is exposed in the first groove 22131 may be used together with the bonding region that is of the second adhesive layer 224 and that is exposed in the second groove 22132 to adhere to the fallout particles in the sealed cavity 2215, thereby improving a dust removal effect in the sealed cavity 2215.

In some other implementations, a first adhesive body 225 may be disposed on a step surface of the first groove 22131, and a second adhesive body 226 may be disposed on a step surface of the second groove 22132. In this case, the bonding region of the first adhesive layer 223 may be exposed in the first groove 22131, or may not be exposed in the first groove 22131. Similarly, the bonding region of the second adhesive layer 224 may be exposed in the second groove 22132, or may not be exposed in the second groove 22132. Details are not described herein again.

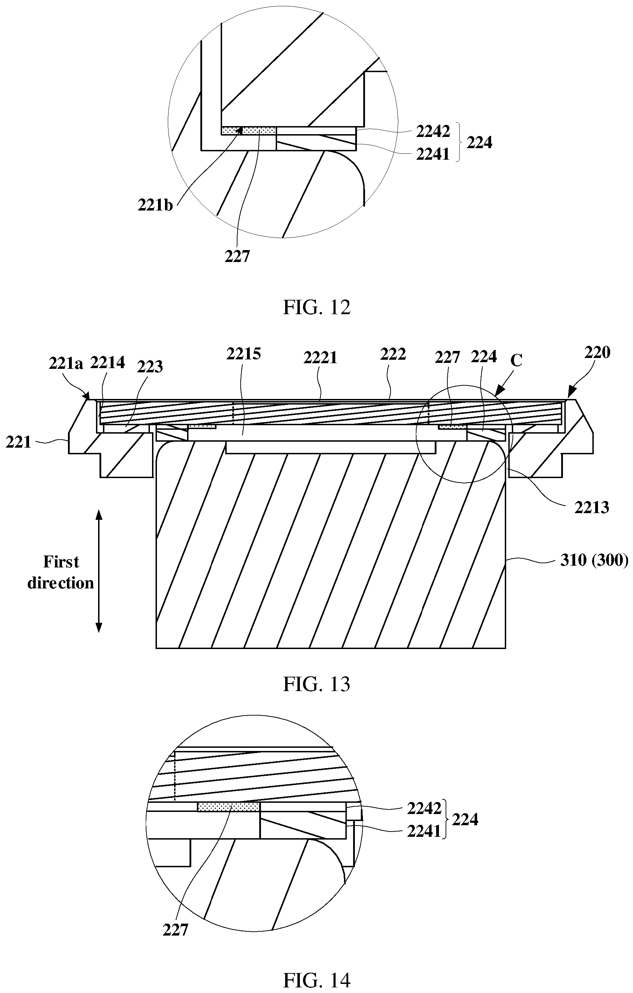

FIG. 11 is a sectional view of another camera decoration assembly 220 and a camera 300 in an assembled state according to an embodiment of this application. FIG. 12 is a partial enlarged view at B in FIG. 11. Refer to FIG. 11 and FIG. 12 together. In this embodiment of this application, the camera decoration assembly 220 may further include a third adhesive layer 227. The third adhesive layer 227 is bonded to the second surface 221b of the decoration member 221. The third adhesive layer 227 is located on an inner side of the second adhesive layer 224 in a radial direction of the through hole 2213. A projection of the third adhesive layer 227 in the first direction does not overlap the projection of the window region 2221 in the first direction, to prevent the third adhesive layer 227 from adversely affecting a photographing effect of the camera 300.

In this embodiment, a thickness of the third adhesive layer 227 is less than a thickness of the second adhesive layer 224. For example, the third adhesive layer 227 may be adhesive backing. After the camera 300 decoration assembly is assembled with the camera 300, because of existence of the second adhesive layer 224, a gap is formed between the second surface 221b of the decoration member 221 and the shoulder 313 of the lens barrel 310, and a bonding region on a side that is of the third adhesive layer 227 and that faces away from the lens 222 is exposed in the gap. It is easy to understand that the gap communicates with the sealed cavity 2215. Therefore, the fallout particles such as dust and lint in the sealed cavity 2215 can enter the gap and be adhered by the third adhesive layer 227, so that the third adhesive layer 227 is used to achieve a dust removal effect on the sealed cavity 2215.

As described above, the second adhesive layer 224 may be a foam tape that is adhesive on one side and non-adhesive on the other side. For example, the second adhesive layer 224 may include a foam layer 2241 and an adhesive backing layer 2242. The foam layer 2241 is bonded to one side of the adhesive backing layer 2242, a side that is of the adhesive backing layer 2242 and that faces away from the foam layer 2241 is configured to bond to the second surface 221b of the decoration member 221, and a side that is of the foam layer 2241 and that faces away from the adhesive backing layer 2242 is configured to abut against the camera 300. In an implementation, given that the avoidance hole is provided in the second adhesive layer 224, an inner side part that is of the foam layer 2241 and that is close to the avoidance hole may be removed, to expose an inner side part of the adhesive backing layer 2242. In this way, the exposed inner side part of the adhesive backing layer 2242 may serve as the third adhesive layer 227. This design can reduce positioning difficulty of the third adhesive layer 227, and help simplify an assembly process of the rear housing module 200.

FIG. 13 is a sectional view of another camera decoration assembly 220 and a camera 300 in an assembled state according to an embodiment of this application. FIG. 14 is a partial enlarged view at C in FIG. 13. Refer to FIG. 13 and FIG. 14 together. In this embodiment of this application, the camera decoration assembly 220 includes a decoration member 221, a lens 222, a first adhesive layer 223, a second adhesive layer 224, and a third adhesive layer 227. A structure of the decoration member 221 is similar to that in the foregoing embodiment, and the decoration member 221 may include a first surface 221a and a second surface 221b that are disposed facing away from each other in a first direction. In addition, the decoration member 221 is provided with a through hole 2213 that penetrates the first surface 221a and the second surface 221b, and the through hole 2213 may be configured to accommodate a part of the camera 300. The lens 222 is bonded and fastened to the first surface 221a of the decoration member 221 via the first adhesive layer 223. For example, a recess 2214 may be provided on the first surface 221a, and the lens 222 may be embedded in the recess 2214. The second adhesive layer 224 is bonded to a side that is of the lens 222 and that faces the camera 300, and a projection of the second adhesive layer 224 in the first direction is located within a projection range of the through hole 2213 in the first direction. The second adhesive layer 224 may be configured to fasten the decoration member 221 to the camera 300. The third adhesive layer 227 is bonded to the side that is of the lens 222 and that faces the camera 300. The third adhesive layer 227 is located on an inner side of the second adhesive layer 224 in a radial direction of the through hole 2213, and a thickness of the third adhesive layer 227 is less than a thickness of the second adhesive layer 224. A projection of the third adhesive layer 227 in the first direction does not overlap a projection of a window region 2221 in the first direction, to prevent the third adhesive layer 227 from adversely affecting a photographing effect of the camera 300.

The first adhesive layer 223 may be adhesive backing, and surfaces of two sides of the first adhesive layer 223 are bonding regions of the first adhesive layer 223. Therefore, the first adhesive layer 223 may be separately bonded to the first surface 221a of the decoration member 221 and the lens 222, to fasten the first surface 221a of the decoration member 221 and the lens 222. The second adhesive layer 224 may be a foam tape. In an implementation, surfaces of two sides of the second adhesive layer 224 are bonding regions of the second adhesive layer 224, and the second adhesive layer 224 may be separately bonded to the lens 222 and the camera 300, to fasten the lens 222 and the camera 300. In another implementation, a surface of a side that is of the second adhesive layer 224 and that faces the lens 222 is a bonding region, and a surface of a side that is of the second adhesive layer 224 and that faces away from the lens 222 is non-adhesive. In this case, the surface that is of the second adhesive layer 224 and that faces the lens 222 is bonded to the lens 222, and the surface that is of the second adhesive layer 224 and that faces away from the lens 222 may be in interference fit with the camera 300, so that the camera 300 is in close contact with the lens 222 by squeezing the second adhesive layer 224. The third adhesive layer 227 may be adhesive backing, surfaces of two sides of the third adhesive layer 227 are bonding regions of the third adhesive layer 227, and the surface of one side of the third adhesive layer 227 is bonded to the lens 222.

In this embodiment, after the camera decoration assembly 220 is assembled with the camera 300, because of existence of the second adhesive layer 224, a gap between a light entrance side of the camera 300 and the lens 222 forms a sealed cavity 2215. In addition, because the third adhesive layer 227 is located on the inner side of the second adhesive layer 224, the third adhesive layer 227 is naturally located in the sealed cavity 2215. In this way, a bonding region on a side that is of the third adhesive layer 227 and that faces away from the lens 222 may be exposed in the sealed cavity 2215. According to this design, after assembly of the entire device is completed, the entire device is vibrated or the lens 222 is knocked, so that fallout particles such as dust and lint in the sealed cavity 2215 may be adhered to the bonding region that is of the third adhesive layer 227 and that is exposed in the sealed cavity 2215, thereby achieving dust removal, reducing a risk that the fallout particles fall on a light inlet of the camera 300 or the window region 2221 of the lens 222, and improving imaging quality of the camera 300. In addition, a proportion of electronic devices that are reworked and disassembled due to the fallout particles in the window region 2221 can be effectively reduced, and production efficiency of the electronic device can be improved.

In some embodiments, the second adhesive layer 224 includes a foam layer 2241 and an adhesive backing layer 2242. The foam layer 2241 is bonded to one side of the adhesive backing layer 2242, a side that is of the adhesive backing layer 2242 and that faces away from the foam layer 2241 is configured to bond to the second surface 221b of the decoration member 221, and a side that is of the foam layer 2241 and that faces away from the adhesive backing layer 2242 is configured to abut against the camera 300. In an implementation, in the radial direction of the through hole 2213, an inner side part of the foam layer 2241 may be removed, to expose an inner side part of the adhesive backing layer 2242. In this way, the exposed inner side part of the adhesive backing layer 2242 may serve as the third adhesive layer 227. This design can reduce positioning difficulty of the third adhesive layer 227, and help simplify an assembly process of the rear housing module 200.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera decoration assembly, comprising a decoration member, a lens, a first adhesive layer, and a second adhesive layer, wherein
the decoration member comprises a first surface and a second surface that are disposed facing away from each other in a first direction, a through hole that penetrates the first surface and the second surface is provided in the decoration member, the first surface is connected to the lens via the first adhesive layer, the second surface is connected to a camera via the second adhesive layer, and two ends of the through hole are respectively sealed by the lens and the camera to form a sealed cavity;
the lens comprises a window region, a projection of the window region in the first direction is located within a projection range of the through hole in the first direction, the projection of the window region in the first direction does not overlap a projection of the first adhesive layer in the first direction, and the projection of the window region in the first direction does not overlap a projection of the second adhesive layer in the first direction; and
a part of a bonding region of at least one of the first adhesive layer and the second adhesive layer is exposed in the sealed cavity.

2. The camera decoration assembly according to claim 1, wherein a first groove is provided on an inner wall of the through hole, and the first groove runs through the first surface; and
a part of a bonding region on a side that is of the first adhesive layer and that faces away from the lens is exposed in the first groove.

3. The camera decoration assembly according to claim 2, wherein the first groove comprises a step surface disposed facing the first surface, and a first adhesive body is disposed on the step surface of the first groove.

4. The camera decoration assembly according to claim 2 or 3, wherein the first groove is of an annular structure.

5. The camera decoration assembly according to any one of claims 1 to 4, wherein a second groove is provided on the inner wall of the through hole, and the second groove runs through the second surface; and
a part of a bonding region on a side that is of the second adhesive layer and that faces the lens is exposed in the second groove.

6. The camera decoration assembly according to claim 5, wherein the second groove comprises a step surface disposed facing the second surface, and a second adhesive body is disposed on the step surface of the second groove.

7. The camera decoration assembly according to claim 5 or 6, wherein the second groove is of an annular structure.

8. The camera decoration assembly according to any one of claims 1 to 4, wherein the camera decoration assembly further comprises a third adhesive layer, the third adhesive layer is bonded to the second surface, the third adhesive layer is located on an inner side of the second adhesive layer in a radial direction of the through hole, and a thickness of the third adhesive layer is less than a thickness of the second adhesive layer; and
the projection of the window region in the first direction does not overlap a projection of the third adhesive layer in the first direction.

9. The camera decoration assembly according to any one of claims 1 to 8, wherein the first adhesive layer is adhesive backing, and the second adhesive layer is a foam tape.

10. A camera decoration assembly, comprising a decoration member, a lens, a first adhesive layer, a second adhesive layer, and a third adhesive layer, wherein
the decoration member comprises a first surface and a second surface that are disposed facing away from each other in a first direction, a through hole that penetrates the first surface and the second surface is provided in the decoration member, and the through hole is configured to accommodate a part of a camera;
the lens is connected to the first surface via the first adhesive layer, the lens is connected, via the second adhesive layer, to the part that is of the camera and that is accommodated in the through hole, a sealed cavity is formed between the lens and the camera, the third adhesive layer is bonded to a side that is of the lens and that faces the camera, the third adhesive layer is located on an inner side of the second adhesive layer in a radial direction of the through hole, a thickness of the third adhesive layer is less than a thickness of the second adhesive layer, and a bonding region on a side that is of the third adhesive layer and that faces away from the lens is exposed in the sealed cavity; and
the lens comprises a window region, a projection of the window region in the first direction is located within a projection range of the through hole in the first direction, and the projection of the window region in the first direction does not overlap a projection of the third adhesive layer in the first direction.

11. A rear housing module, comprising a rear housing and the camera decoration assembly according to any one of claims 1 to 10, wherein a hole is provided in the rear housing, the camera decoration assembly is mounted in the hole, a peripheral side of the decoration member fits against an inner wall of the hole, a first surface of the decoration member is located on one side of the rear housing, and a second surface of the decoration member is located on the other side of the rear housing.

12. An electronic device, comprising a display, a camera, and the rear housing module according to claim 11, wherein the display is connected to the rear housing module to form accommodation space, a first surface of the decoration member is located outside the accommodation space, a second surface of the decoration member is located inside the accommodation space, the camera is disposed in the accommodation space, and a light-emission side of the camera is opposite to a position of a window region of the lens.
